# EUROPÄISCHE PATENTSCHRIFT

(11) **EP 3 153 720 B1**
(45) Veröffentlichungstag und Bekanntmachung des Hinweises auf die Patenterteilung: **22.05.2019**
(21) Anmeldenummer: 16174920.5
(22) Anmeldetag: 17.06.2016
(51) Int. Cl.: F16B 12/24, F16B 12/26, F16B 12/46

(54) **TABLARVERBINDER MIT AUFSPREIZBAREM EINBOHRTOPF**
SHELF CONNECTOR HAVING AN EXPANDABLE DRILL CUP
ETAGÈRE COMPRENANT UNE MÈCHE EXTENSIBLE

(30) Priorität: 05.10.2015 DE 202015105232 U
(43) Veröffentlichungstag der Anmeldung: 12.04.2017
(73) Patentinhaber: Häfele GmbH & Co KG, 72202 Nagold (DE)
(72) Erfinder: Walz, Rüdiger, 72149 Neustetten (DE)
(74) Vertreter: Kohler Schmid Möbus Patentanwälte

(56) Entgegenhaltungen:
- EP-A2- 0 681 109
- EP-A2- 1 530 926
- DE-B3- 10 229 300
- DE-U1- 20 002 307
- DE-U1- 29 611 421

## Beschreibung

Die Erfindung betrifft einen Verbinder, insbesondere Tablarverbinder, mit einem Einbohrtopf zum Einsetzen in eine unterseitige, randoffene Bohrung eines ersten Bauteils und mit einem Trägerteil zum Befestigen in einer Bohrung eines zweiten Bauteils, wobei der Einbohrtopf einen offenen oder geschlossenen Topfboden, eine Topföffnung und in seiner Umfangswand einen bis zur Topföffnung hin offenen Längsschlitz aufweist, wobei das Trägerteil einen Auflageboden, einen über den Auflageboden hochstehenden Befestigungsschenkel und ein Spreizelement aufweist und wobei der Einbohrtopf mit seinem Längsschlitz und das Trägerteil mit seinem Befestigungsschenkel ineinander steckbar sind.

Ein derartiger Verbinder ist beispielsweise durch das DE 200 02 307 U1 bekannt geworden.

DE 200 02 307 U1 offenbart einen dreiteiligen Verriegelungsbeschlag mit einem L-förmigen Tragteil, einer Aufnahmehülse und einem Verriegelungselement. Das Tragteil und die Aufnahmehülse werden ineinandergesteckt, wobei zwei vorspringende Nocken des Trägerteils von Rastnasen der Aufnahmehülse hintergriffen werden, so dass sich eine gewisse Fixierung der Aufnahmehülse gegenüber dem Tragteil ergibt. Die Rastnasen sind abgerundet mit einer flacheren und einer steileren Flanke ausgebildet und dienen zur lösbaren Vorfixierung der beiden Teile.

Ein Verbinder zum Verbinden zweier Holzfaserplatten ist auch durch das DE 20 2007 009 771 U1 bekannt geworden. Bei diesem bekannten dreiteiligen Verbinder weist der Einbohrtopf in seiner Umfangswand zwei nach außen herausschwenkbbare Rastfedern auf, welche an ihren oberen freien Enden nach innen ragende Wülste besitzen. Beim Einstecken des Trägerteils in den Einbohrtopf werden die Rastfedern durch die Wülste nach außen geschwenkt und dadurch in das Material der Holzfaserplatte gepresst. Durch Verdrehen eines im Trägerteil gelagerten Anzugselements sind einerseits der Einbohrtopf und das Trägerteil aneinander befestigt, und andererseits wird ein seitliches Anziehen von Einbohrtopf und Trägerteil quer zur Steckrichtung, also aufeinander zu, bewirkt. In Verpackungen mit mehreren Einbohrtöpfen können sich die im nichteingebauten Zustand nach außen abstehenden Rastfedern untereinander verhaken, so dass dann die Einbohrtöpfe vorsichtig voneinander getrennt werden müssen.

Es ist die Aufgabe der vorliegenden Erfindung, einen Verbinder der eingangs genannten Art dahingehend weiterzubilden, dass ein Verhaken von Einbohrtöpfen untereinander weitgehend ausgeschlossen und dennoch eine sichere Verankerung des Einbohrtopfs in der Bohrung des ersten Bauteils sichergestellt ist.

Diese Aufgabe wird erfindungsgemäß dadurch gelöst, dass der Einbohrtopf an seinen Umfangswandabschnitten innenseitig zwei nach außen abspreizbare Rastfedern aufweist, die mit ihren freien Enden einander zugewandt und jeweils schräg in Richtung auf den Topfboden gerichtet sind, wobei beim Ineinanderstecken von Einbohrtopf und Trägerteil die Rastfedern durch das Spreizelement ausgelenkt werden und in der Steckendposition hinter dem Spreizelement verrastet sind.

Vorzugsweise sind der Längsschlitz in Richtung auf den Topfboden und/oder der Befestigungsschenkel in Richtung fort vom Auflageboden verjüngt, so dass beim Ineinanderstecken von Einbohrtopf und Trägerteil die beiden an den Längsschlitz angrenzenden Umfangswandabschnitte des Einbohrtopfs durch den Befestigungsschenkel nach außen aufgespreizt werden. Vorzugsweise erstreckt sich der Längsschlitz bis zum Topfboden. Beim Ineinanderstecken von Einbohrtopf und Trägerteil werden die Umfangswandabschnitte nach außen aufgespreizt, um sich in die Bohrungswandung des ersten Bauteils einzudrücken und so zu einer stabileren Verankerung des Einbohrtopfes führen. Solange das Trägerteil nicht eingesteckt ist, lässt sich daher der in die Bohrung des ersten Bauteils eingesetzte Einbohrtopf von Hand noch jederzeit durch Verdrehen ausrichten. Der Topfboden ist geschlossen oder offen und kann im letzteren Fall auch nur durch den Öffnungsrand einer Bodenöffnung gebildet sein.

Besonders bevorzugt weisen die Umfangswandabschnitte des Einbohrtopfs außenseitig eine Verrippung, z.B. in Form von Umfangsrippen, auf, die sich beim Aufspreizen der Umfangswandabschnitte in die Bohrungswandung des ersten Bauteils eindrücken und dadurch den Einbohrtopf sicher verankern.

Besonders bevorzugt sind am Einbohrtopf und/oder am Befestigungsschenkel schräg zur Steckrichtung verlaufende Führungsflächen vorgesehen, die beim Ineinanderstecken von Einbohrtopf und Trägerteil ein seitliches Anziehen von Einbohrtopf und Trägerteil quer zur Steckrichtung bewirken. Die Schrägflächen übernehmen zusammen mit der Verrastung von Einbohrtopf und Trägerteil die Funktionen des bisher vorhandenen Anzugselements, auf das somit verzichtet werden kann.

Als Tiefenanschlag kann der Einbohrtopf an seiner Topföffnung mindestens einen radial nach außen vorstehenden Randabschnitt, insbesondere zwei oder mehr Randabschnitte, aufweisen.

In einer Steckvariante weist der Befestigungsschenkel des Trägerteils einen Steckzapfen zum Einstecken in die Bohrung des zweiten Bauteils auf. In einer Schraubvariante weist der Befestigungsschenkel des Trägerteils ein Durchgangsloch für eine Schraube zum Einschrauben in die Bohrung des zweiten Bauteils auf.

Die Erfindung betrifft auch eine Anordnung aufweisend ein erstes Bauteil, insbesondere Tablar, mit einer unterseitigen, randoffenen Bohrung, ein zweites Bauteil, insbesondere Korpuswand, mit einer Bohrung und einen wie oben ausgebildeten Verbinder, wobei der Einbohrtopf in die Bohrung des ersten Bauteils eingesetzt ist, wobei das Trägerteil mit seinem Befestigungsschenkel in der Bohrung des zweiten Bauteils befestigt ist und wobei der Einbohrtopf auf den Befestigungsschenkel des Trägerteils unter Aufspreizen der beiden Umfangswandabschnitte des Einbohrtopfs und/oder unter Verrastung mit dem Trägerteil eingehängt ist.

Vorzugsweise sind das erste und/oder das zweite Bauteil aus Holz oder aus einem Holzfaserstoff gebildet.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform eines erfindungsgemäßen Tablarverbinders mit einem aufspreizbaren Einbohrtopf und einem Trägerteil;
- Fign. 2a-2c: das Aufspreizen des Einbohrtopfs beim Einstecken des Trägerteils, jeweils in einer Schnittansicht;
- Fign. 3a-3d: das Verrasten von Einbohrtopf und Trägerteil beim Ineinanderstecken, jeweils in einer Schnittansicht;
- Fign. 4a-4c: das Befestigen des Einbohrtopfs an einem Tablar;
- Fign. 5a-5c: das Befestigen des Trägerteils an einer Korpuswand;
- Fign. 6a-6c: das Befestigen des Tablars an der Korpuswand mittels des Tablarverbinders von Fig. 1;
- Fig. 7: eine Schnittansicht des im Tablar verankerten Tablarverbinders;
- Fig. 8: eine zweite Ausführungsform eines erfindungsgemäßen Tablarverbinders mit einem aufspreizbaren Einbohrtopf und einem Trägerteil; und
- Fign. 9a-9c: das Befestigen des Tablarverbinders von Fig. 8 an einer Korpuswand.

In der folgenden Figurenbeschreibung werden für gleiche bzw. funktionsgleiche Bauteile identische Bezugszeichen verwendet.

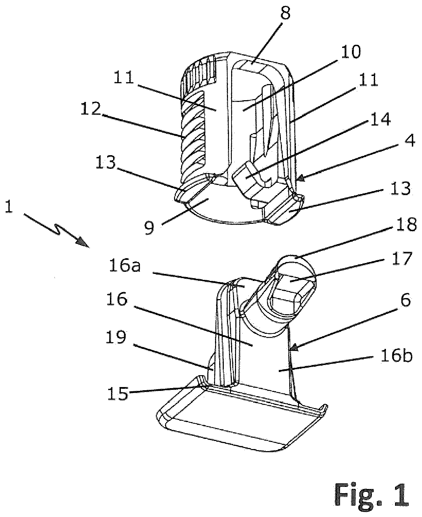

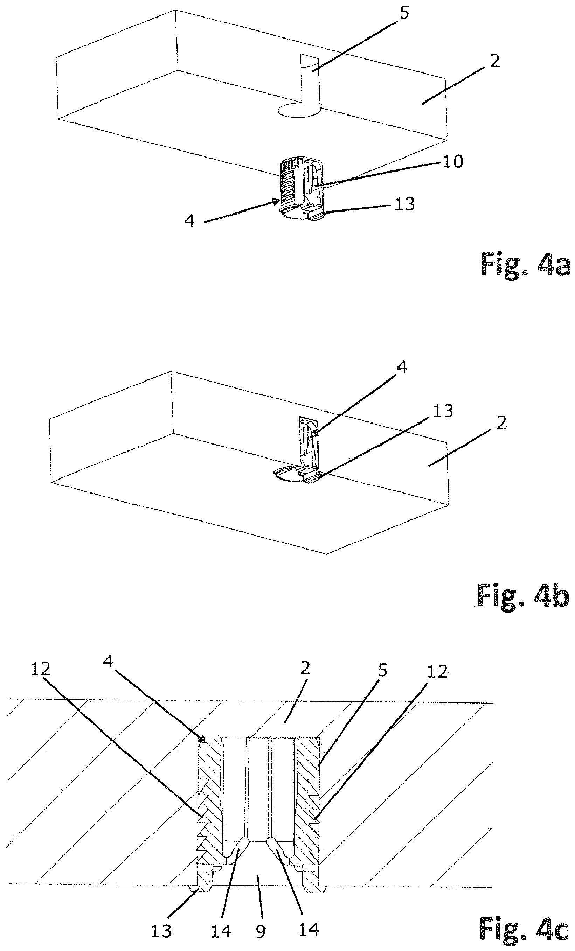

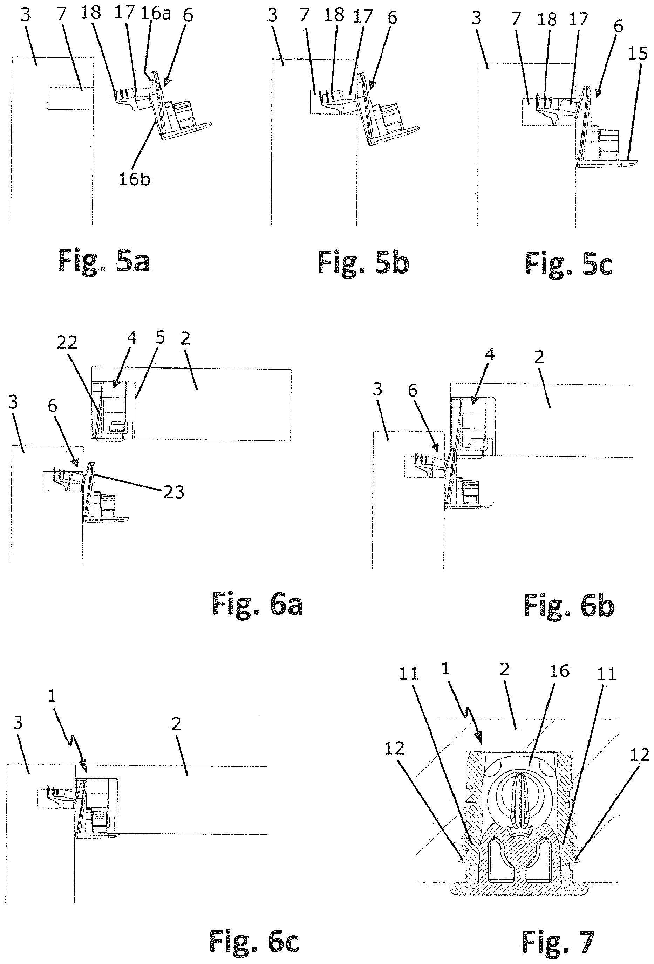

Der in **Fig. 1** gezeigte Tablarverbinder **1** dient zum Befestigen eines Tablars **2** (Fig. 4) an einer Korpuswand **3** (Fig. 5) und umfasst einen einstückigen Einbohrtopf **4** zum Einsetzen in eine unterseitige, randoffene Bohrung **5** des Tablars 2 und ein einstückiges Trägerteil **6** zum Befestigen in einer Bohrung **7** der Korpuswand 3. Vorzugsweise ist der Einbohrtopf 4 aus Kunststoff und das Trägerteil 6 aus Zinkdruckguss. Das Tablar 2 und die Korpuswand 3 sind beispielsweise Holzfaserplatten.

Der Einbohrtopf 4 weist einen Topfboden **8**, eine stirnseitige Topföffnung **9** und in seiner Umfangswand einen zur Topföffnung 9 hin offenen Längsschlitz **10** auf, der sich bis zum Topfboden 8 erstreckt und in Richtung auf den Topfboden 8 verjüngt ist. Statt wie gezeigt geschlossen, könnte der Topfboden 8 auch offen sein. Die beiden an den Längsschlitz 10 angrenzenden Umfangswandabschnitte **11** des Einbohrtopfs 4 weisen außenseitig eine Verrippung in Form von mehreren axial hintereinander angeordneten Umfangsrippen **12** sowie an der Topföffnung 9 zwei radial nach außen vorstehende Randabschnitte **13** zur Tiefenbegrenzung auf. An den Umfangswandabschnitten 11 stehen innenseitig weiterhin zwei Rastfedern **14** ab, die mit ihren freien Enden einander zugewandt und jeweils schräg in Richtung auf den Topfboden 8 gerichtet sind.

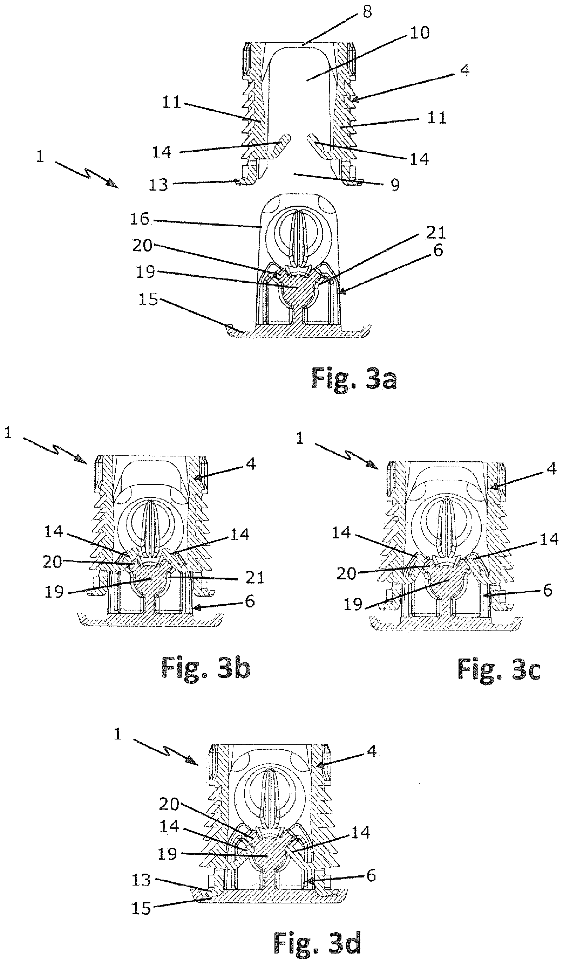

Das Trägerteil 6 weist einen Auflageboden **15** und einen über den Auflageboden 15 hochstehenden Befestigungsschenkel **16** auf. Oberhalb des Auflagebodens 15, aber auf der dem Auflageboden 15 abgewandten Seite des Befestigungsschenkels 16 steht am Befestigungsschenkel 16 ein Steckzapfen **17** ab, der auf seiner Oberseite mit mehreren Keilnasen **18** versehen ist. Etwa auf halber Höhe zwischen Auflageboden 15 und Steckzapfen 17 weist der Befestigungsschenkel 16 an seiner dem Steckzapfen 17 abgewandten Seite ein etwa V-förmiges Spreizelement **19** mit zwei seitlichen Spreizvorsprüngen **20** auf (Fig. 3), die - gesehen in Richtung fort vom Auflageboden 15 - jeweils schräg in Richtung fort voneinander vorstehen. Wie unten noch näher beschrieben, bildet der oberhalb des Steckzapfens 17 liegende obere Wandabschnitt **16a** des Befestigungsschenkels 16 eine Anschlagfläche, die gegenüber dem unterhalb des Steckzapfens 17 liegenden unteren Wandabschnitt **16b** um ca. 20° abgewinkelt ist.

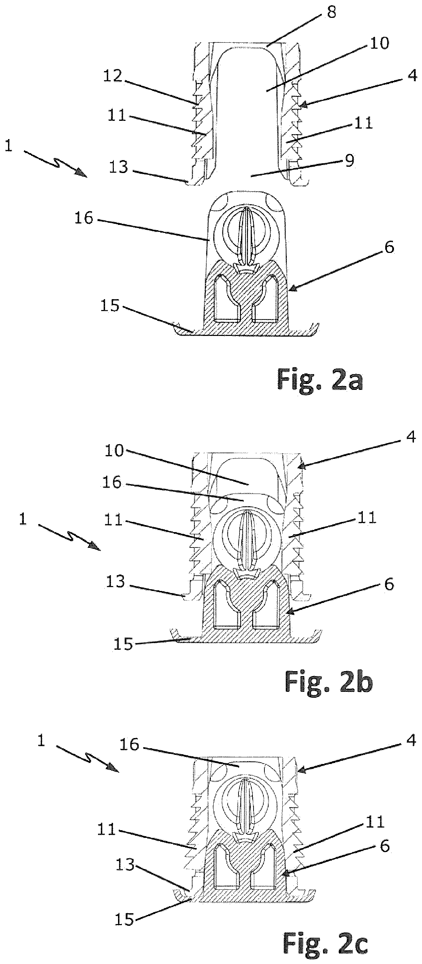

Der Einbohrtopf 4 mit seinem Längsschlitz 10 und das Trägerteil 6 mit seinem Befestigungsschenkel 16 sind ineinander steckbar. Wie in **Fign. 2a bis 2c** gezeigt, werden beim Ineinanderstecken die beiden an den Längsschlitz 10 angrenzenden Umfangswandabschnitte 11 des Einbohrtopfs 4 durch den verjüngten Befestigungsschenkel 16 nach außen aufgespreizt. Die in Fig. 2c gezeigte Steckendposition ist erreicht, wenn die Randabschnitte 13 am Auflageboden 15 anliegen.

Wie in **Fign. 3a bis 3d** gezeigt, werden beim Ineinanderstecken die Rastfedern 14 durch die Spreizvorsprünge 20 elastisch nach außen ausgelenkt. In der Steckendposition sind die Spreizvorsprünge 20 und die Rastfedern 14 aneinander vorbeigeschoben, so dass die Rastfedern 14 zurückfedern und die Spreizvorsprünge 20 rastend hintergreifen, genauer gesagt in Rastmulden **21** am Spreizelement 19 formschlüssig einrasten. In der Steckendposition (Fig. 3d) sind somit der Einbohrtopf 4 und das Trägerteil 6 miteinander verrastet.

In **Fign. 4a-4c** ist die Montage des Einbohrtopfes 4 in das Tablar 2 gezeigt. Der Einbohrtopf 4 wird mit seinem zum offenen Rand der Bohrung 5 ausgerichteten Längsschlitz 10 in die Bohrung 5 (Durchmesser 12mm) von Hand eingedrückt, bis die Randabschnitte 13 an der Tablarunterseite zur Anlage kommen und dadurch die Eindrücktiefe begrenzen. In dem in Fig. 4c gezeigten eingedrückten Zustand sind die Umfangsrippen 12 noch nicht in die Wandung der Bohrung 5, also in den Holzwerkstoff des Tablars 2, eingedrückt, so dass der Einbohrtopf 4 von Hand noch jederzeit durch Verdrehen ausgerichtet werden kann.

In **Fign. 5a-5c** ist die Montage des Trägerteils 6 an der Korpuswand 3 gezeigt. Das Trägerteil 6 wird mit seinem Steckzapfen 17 in die Bohrung 7 (Durchmesser 5mm) der Korpuswand 3 zunächst schräg eingesteckt, bis der obere Wandabschnitt 16a an der Korpuswand 3 anliegt. Dann wird das Trägerteil 6 um ca. 20° nach unten verkippt, bis der untere Wandabschnitt 16b an der Korpuswand 3 anliegt und der Auflageboden 15 horizontal ausgerichtet ist (Fig. 5c). Durch das Verkippen werden auch die Keilnasen 18 in die Wandung der Bohrung 7, also in den Holzwerkstoff der Korpuswand 3, eingedrückt.

In den **Fign. 6a bis 6c** ist das Befestigen des Tablars 2 an der Korpuswand 3 mittels des Tablarverbinders 1 gezeigt. Das Tablar 2 wird mit seinem Einbohrtopf 4 von oben auf das in der Korpuswand 3 verankerte Trägerteil 6 eingehängt, wobei der Einbohrtopf 4 mit seinem Längsschlitz 10 auf den Befestigungsschenkel 16 des Trägerteils 6 gesteckt wird. Schräge Führungsflächen **22**, **23** am Einbohrtopf 4 und am Befestigungsschenkel 16 bewirken beim Einhängen, dass der Einbohrtopf 4 in Richtung auf den Steckzapfen 17 gezogen wird und dadurch das Tablar 2 spaltfrei an der Korpuswand 3 anliegt. In der in Fig. 6c gezeigten Steckendposition ist einerseits der Einbohrtopf 4 durch die Rastfedern 14 im Trägerteil 6 verrastet (verclipst). Andererseits sind, wie in **Fig. 7** gezeigt, die beiden Umfangswandabschnitte 11 des Einbohrtopfs 4 durch den verjüngten Befestigungsschenkel 16 nach außen aufgespreizt und dadurch die Umfangsrippen 12 in die Wandung der Bohrung 5, also in den Holzwerkstoff des Tablars 2, eingedrückt. Der Einbohrtopf 4 ist so in der Bohrung 3 fest verankert.

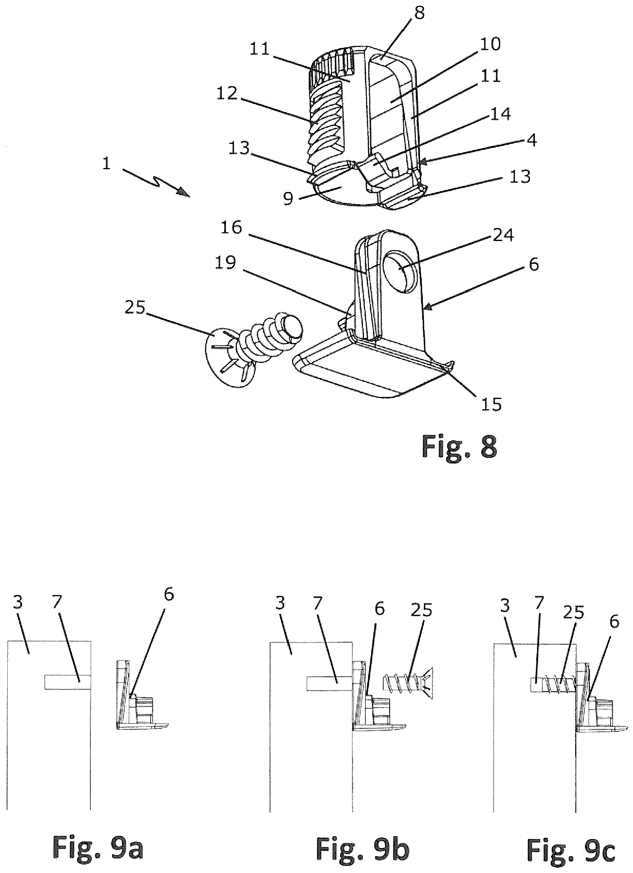

Vom Tablarverbinder der Fig. 1 unterscheidet sich der in **Fig. 8** gezeigte Tablarverbinder 1 dadurch, dass hier das Trägerteil 6 statt eines Steckzapfens ein Durchgangsloch **24** für eine Schraube **25** aufweist. In **Fign. 9a-9c** ist die Montage des Trägerteils 6 an der Korpuswand 3 gezeigt, indem die das Durchgangsloch 24 durchgreifende Schraube 25 in die Bohrung 7 der Korpuswand 3 eingeschraubt wird.

## Patentansprüche

1. Verbinder (1), insbesondere Tablarverbinder, mit einem Einbohrtopf (4) zum Einsetzen in eine unterseitige, randoffene Bohrung (5) eines ersten Bauteils (2) und mit einem Trägerteil (6) zum Befestigen in einer Bohrung (7) eines zweiten Bauteils (3), wobei der Einbohrtopf (4) einen Topfboden (8), eine Topföffnung (9) und in seiner Umfangswand einen bis zur Topföffnung (8) hin offenen Längsschlitz (10) aufweist, wobei das Trägerteil (6) einen Auflageboden (15), einen über den Auflageboden (15) hochstehenden Befestigungsschenkel (16) und ein Spreizelement (19) aufweist und wobei der Einbohrtopf (4) mit seinem Längsschlitz (10) und das Trägerteil (6) mit seinem Befestigungsschenkel (11) ineinander steckbar sind,
**dadurch gekennzeichnet,**
**dass** der Einbohrtopf (4) an seinen Umfangswandabschnitten innenseitig zwei nach außen abspreizbare Rastfedern (14) aufweist, die mit ihren freien Enden einander zugewandt und jeweils schräg in Richtung auf den Topfboden (8) gerichtet sind, wobei beim Ineinanderstecken von Einbohrtopf (4) und Trägerteil (6) die Rastfedern (14) durch das Spreizelement (19) ausgelenkt werden und in der Steckendposition hinter dem Spreizelement (19) verrastet sind.

2. Verbinder nach Anspruch 1, **dadurch gekennzeichnet, dass** der Längsschlitz (10) in Richtung auf den Topfboden (8) und/oder der Befestigungsschenkel (16) in Richtung fort vom Auflageboden (15) verjüngt sind, so dass beim Ineinanderstecken von Einbohrtopf (4) und Trägerteil (6) die beiden an den Längsschlitz (10) angrenzenden Umfangswandabschnitte (11) des Einbohrtopfs (4) durch den Befestigungsschenkel (16) nach außen aufgespreizt werden.

3. Verbinder nach Anspruch 1 oder 2, **dadurch gekennzeichnet, dass** die Umfangswandabschnitte (11) des Einbohrtopfs (4) außenseitig eine Verrippung (12) aufweisen.

4. Verbinder nach einem der vorhergehenden Ansprüche, **dadurch gekennzeichnet, dass** am Einbohrtopf (4) und/oder am Befestigungsschenkel (16) schräg zur Steckrichtung verlaufende Führungsflächen (22, 23) vorgesehen sind, die beim Ineinanderstecken von Einbohrtopf (4) und Trägerteil (6) ein seitliches Anziehen von Einbohrtopf (4) und Trägerteil (6) quer zur Steckrichtung bewirken.

5. Verbinder nach einem der vorhergehenden Ansprüche, **dadurch gekennzeichnet, dass** der Einbohrtopf (4) an seiner Topföffnung (9) mindestens einen radial nach außen vorstehenden Randabschnitt (13), insbesondere mehrere Randabschnitte (13), aufweist.

6. Verbinder nach einem der vorhergehenden Ansprüche, **dadurch gekennzeichnet, dass** sich der Längsschlitz (10) bis zum Topfboden (8) erstreckt.

7. Verbinder nach einem der vorhergehenden Ansprüche, **dadurch gekennzeichnet, dass** der Befestigungsschenkel (16) des Trägerteils (6) einen Steckzapfen (17) zum Einstecken in die Bohrung (7) des zweiten Bauteils (3) aufweist.

8. Verbinder nach einem der Ansprüche 1 bis 6, **dadurch gekennzeichnet, dass** der Befestigungsschenkel (16) des Trägerteils (6) ein Durchgangsloch (24) für eine Schraube (25) zum Einschrauben in die Bohrung (7) des zweiten Bauteils (3) aufweist.

9. Anordnung aufweisend ein erstes Bauteil (2), insbesondere Tablar, mit einer unterseitigen, randoffenen Bohrung (5), ein zweites Bauteil (3), insbesondere Korpuswand, mit einer Bohrung (7) und einen Verbinder (1) nach einem der vorhergehenden Ansprüche, wobei der Einbohrtopf (4) in die Bohrung (5) des ersten Bauteils (2) eingesetzt ist, wobei das Trägerteil (6) mit seinem Befestigungsschenkel (17) in der Bohrung (7) des zweiten Bauteils (3) befestigt ist und wobei der Einbohrtopf (4) auf den Befestigungsschenkel (16) des Trägerteils (6) unter Aufspreizen der beiden Umfangswandabschnitte (11) des Einbohrtopfs (4) und/oder unter Verrastung des Trägerteils (6) eingehängt ist.

10. Anordnung nach Anspruch 9, **dadurch gekennzeichnet, dass** das erste und/oder das zweite Bauteil (2, 3) aus Holz oder aus einem Holzfaserstoff gebildet sind.

## Claims

1. Connector (1), in particular a shelf connector, comprising a drilling pot (4) for insertion into a bore (5) on the lower side which is open at the edge, of a first component (2), and a support part (6) for mounting in a bore (7) of a second component (3), wherein the drilling pot (4) comprises a pot bottom (8), a pot opening (9) and, in its circumferential wall, a longitudinal slot (10) which is open up to the pot opening (8), wherein the support part (6) comprises a support bottom (15), a fastening leg (16) projecting past the support bottom (15), and an expansion element (19) and wherein the longitudinal slot (10) of the drilling pot (4) and the fastening leg (11) of the support part (6) can be inserted into one another,
**characterized in that**
the drilling pot (4) comprises on the inside of its circumferential wall sections two detent springs (14) that can be expanded to the outside and the free ends of which face one another and are each oriented at an inclination towards the pot bottom (8), wherein, during inserting the drilling pot (4) and the support part (6) into one another, the detent springs (14) are deflected by the expansion element (19) and are locked in the finally mounted position behind the expansion element (19).

2. Connector according to claim 1, **characterized in that** the longitudinal slot (10) tapers towards the pot bottom (8) and/or the fastening leg (16) tapers in a direction away from the support bottom (15) such that, when inserting the drilling bottom (4) and the support part (6) into one another, the two circumferential wall sections (11) of the drilling pot (4) that border the longitudinal slot (10) are expanded to the outside by the fastening leg (16).

3. Connector according to claim 1 or 2, **characterized in that** the circumferential wall sections (11) of the drilling pot (4) have a rib structure (12) on the outside.

4. Connector according to any one of the preceding claims, **characterized in that** guiding surfaces (22, 23) are provided on the drilling pot (4) and/or on the fastening leg (16), which extend at an inclination with respect to the insertion direction and which, upon insertion of the drilling pot (4) and the support part (6) into one another cause lateral tightening of the drilling pot (4) and support part (6) transversely to the insertion direction.

5. Connector according to any one of the preceding claims, **characterized in that** the drilling pot (4) comprises at its pot opening (9) at least one edge section (13), in particular a plurality of edge sections (13), which project(s) in a radial outward direction.

6. Connector according to any one of the preceding claims, **characterized in that** the longitudinal slot (10) extends to the pot bottom (8).

7. Connector according to any one of the preceding claims, **characterized in that** the fastening leg (16) of the support part (6) comprises an insertion pin (17) for insertion into the bore (7) of the second component (3).

8. Connector according to any one of the claims 1 to 6, **characterized in that** the fastening leg (16) of the support part (6) comprises a through-hole (24) for a screw (25) for screwing into the bore (7) of the second component (3).

9. Arrangement comprising a first component (2), in particular a shelf, with a bore (5) on the lower side which is open at the edge, a second component (3), in particular a body wall, with a bore (7) and a connector (1) according to any one of the preceding claims, wherein the drilling pot (4) is inserted into the bore (5) of the first component (2), wherein the support part (6) is mounted with its fastening leg (17) in the bore (7) of the second component (3) and wherein the drilling pot (4) is suspended on the fastening leg (16) of the support part (6) by expanding the two circumferential wall sections (11) of the drilling pot (4) and/or by locking the support part (6).

10. Arrangement according to claim 9, **characterized in that** the first and/or the second component (2, 3) is/are formed of wood or wood fiber.

## Revendications

1. Elément de liaison (1), en particulier élément de liaison de tablettes comprenant un tenon encastrable (4) réalisé pour être inséré dans un perçage (5) à bord ouvert, pratiqué dans la face inférieure d'une première partie structurelle (2), et une pièce de support (6) destinée à être fixée dans un perçage (7) d'une seconde partie structurelle (3), ledit tenon encastrable (4) étant muni d'un fond (8), d'un orifice (9) et, dans sa paroi périphérique, d'une fente longitudinale (10) ouverte jusqu'au niveau dudit orifice (9) du tenon, sachant que la pièce de support (6) comporte un fond d'appui (15), une aile de fixation (16) se dressant au-dessus dudit fond d'appui (15), et un élément d'écartement (19), et sachant que le tenon encastrable (4) et ladite pièce de support (6) peuvent être emboîtés l'un dans l'autre, l'un par sa fente longitudinale (10) et l'autre par son aile de fixation (16),
**caractérisé par le fait**
**que** le tenon encastrable (4) est intérieurement pourvu, dans ses zones de paroi périphérique, de deux lamelles encliquetables (14) qui sont déployables vers l'extérieur, sont tournées l'une vers l'autre par leurs extrémités libres et sont respectivement orientées à l'oblique, en direction du fond (8) dudit tenon, sachant que, lors de l'emboîtement mutuel dudit tenon encastrable (4) et de la pièce de support (6), lesdites lamelles encliquetables (14) sont déviées par l'élément d'écartement (19) et sont crantées derrière ledit élément d'écartement (19) à l'emplacement extrême de l'emboîtement.

2. Elément de liaison selon la revendication 1, **caractérisé par le fait que** la fente longitudinale (10) et/ou l'aile de fixation (16) s'amenuise(nt), respectivement, en direction du fond (8) du tenon et dans une direction se prolongeant au-delà du fond d'appui (15), de sorte que, lors de l'emboîtement mutuel du tenon encastrable (4) et de la pièce de support (6), les deux zones (11) de la paroi périphérique dudit tenon encastrable (4), qui sont limitrophes de ladite fente longitudinale (10), sont déployées vers l'extérieur par ladite aile de fixation (16).

3. Elément de liaison selon la revendication 1 ou 2, **caractérisé par le fait que** les zones (11) de la paroi périphérique du tenon encastrable (4) sont dotées d'un nervurage (12) sur leurs faces extérieures.

4. Elément de liaison selon l'une des revendications précédentes, **caractérisé par le fait que** des surfaces de guidage (22, 23), s'étendant à l'oblique par rapport à la direction d'emboîtement, sont prévues sur le tenon encastrable (4) et/ou sur l'aile de fixation (16) et provoquent, lors de l'emboîtement mutuel dudit tenon encastrable (4) et de la pièce de support (6), un resserrement latéral dudit tenon encastrable (4) et de ladite pièce de support (6), transversalement par rapport à ladite direction d'emboîtement.

5. Elément de liaison selon l'une des revendications précédentes, **caractérisé par le fait que** le tenon encastrable (4) présente, au niveau de son orifice (9), au moins une région marginale (13) et, en particulier, plusieurs régions marginales (13) faisant saillie vers l'extérieur dans le sens radial.

6. Elément de liaison selon l'une des revendications précédentes, **caractérisé par le fait que** la fente longitudinale (10) s'étend jusqu'au fond (8) du tenon.

7. Elément de liaison selon l'une des revendications précédentes, **caractérisé par le fait que** l'aile de fixation (16) de la pièce de support (6) est munie d'un mentonnet enfichable (17), réalisé pour être enfiché dans le perçage (7) de la seconde partie structurelle (3).

8. Elément de liaison selon l'une des revendications 1 à 6, **caractérisé par le fait que** l'aile de fixation (16) de la pièce de support (6) est dotée d'un trou traversant (24) destiné à une vis (25) réalisée pour être vissée dans le perçage (7) de la seconde partie structurelle (3).

9. Ensemble composé d'une première partie structurelle (2), notamment d'une tablette présentant un perçage (5) à bord ouvert, pratiqué dans la face inférieure, d'une seconde partie structurelle (3), notamment d'une paroi d'un corps de meuble présentant un perçage (7), et d'un élément de liaison (1) conforme à l'une des revendications précédentes, le tenon encastrable (4) étant inséré dans le perçage (5) de ladite première partie structurelle (2) ; la pièce de support (6) étant fixée, par son aile de fixation (16), dans le perçage (7) de ladite seconde partie structurelle (3) ; et ledit tenon encastrable (4) étant accroché sur ladite aile de fixation (16) de la pièce de support (6), avec déploiement des deux zones (11) de la paroi périphérique dudit tenon encastrable (4) et/ou avec crantage de ladite pièce de support (6).

10. Ensemble selon la revendication 9, **caractérisé par le fait que** la (les) première et/ou seconde partie(s) structurelle(s) (2, 3) consiste(nt) en du bois ou en un matériau à base de fibres de bois.
